# EUROPÄISCHE PATENTSCHRIFT

(11) **EP 2 932 566 B1**
(45) Veröffentlichungstag und Bekanntmachung des Hinweises auf die Patenterteilung: **25.04.2018**
(21) Anmeldenummer: 13792248.0
(22) Anmeldetag: 21.10.2013
(51) Int. Cl.: H01R 13/52, H01R 13/502, H01R 13/58

(54) **AUTOLADESTECKER**
AUTOMOBILE CHARGING PLUG
FICHE MÂLE D'AUTO-CHARGEMENT

(30) Priorität: 17.12.2012 DE 102012112353
(43) Veröffentlichungstag der Anmeldung: 21.10.2015
(73) Patentinhaber: Harting Electric GmbH & Co. KG, 32339 Espelkamp (DE)
(72) Erfinder: GRIEPENSTROH, Sebastian, 32312 Lübbecke (DE); LOSKE, Felix, 49504 Lotte (DE)
(86) Internationale Anmeldenummer: PCT/DE2013/100359
(87) Internationale Veröffentlichungsnummer: WO 2014/094726

(56) Entgegenhaltungen:
- DE-A1- 19 900 201
- DE-A1-102008 054 585
- US-A- 5 044 986
- US-A1- 2006 178 049
- US-A1- 2010 124 454
- US-A1- 2012 315 801

## Beschreibung

Die Erfindung betrifft einen Steckverbinder, insbesondere einen Autoladestecker, nach dem Oberbegriff des Anspruchs 1.

Derartige Steckverbinder werden eingesetzt, wenn hohe Ströme übertragen werden müssen. Das ist beispielsweise bei Autoladesteckern der Fall.

### Stand der Technik

Die EP 2 362 495 B1 zeigt einen Autoladestecker, wobei die im Isolierkörper angeordneten Kontaktelemente, die daran angeschlossenen Leiter und das Gehäuse einzeln abgedichtet sind.
Eine solche Abdichtung eines Autoladesteckers ist aufwendig und teuer.

Die US 2006 0178 049 A1 zeigt einen Steckverbinder nach dem Oberbegriff des Anspruchs 1, mit einem Kontaktträger und einer schlauchförmigen Dichtung, die einendig den Kontaktträger und anderendig das angeschlossene Kabel umschließt. Die DE 10 2008 054 585 A1 zeigt einen Winkelsteckverbinder mit einer schlauchförmigen Dichtung.
Die DE 199 00 201 A1 zeigt einen Steckverbinder mit einem angeschlossenen Kabel. Um das Kabel herum angeordneten ist eine Dichtung mit einem Dichtungskragen angeordnet, der eine Klemmende Wirkung auf das Kabel ausübt.

Die US 2012/315801 A1 zeigt einen Ladesteckverbinder für ein Elektrofahrzeug. Am Steckverbindergehäuse ist ein Betätigungsknopf angeordnet, mit welchem ein Mikroschalter im Gehäuseinneren aktiviert werden kann.
Die US 5 044 986 A zeigt eine Dichtvorrichtung für eine Durchführung einer Leiterplatte, die einen Steckverbinder beinhaltet.
Die US 2010 0124 454 A1 zeigt eine mit Dichtgel gefüllte Vorrichtung.

Die DE 26 25 648 A1 zeigt einen Steckverbinder mit einer schlauchförmigen Dichtung, die mit einem Ende das angeschlossene Kabel abdichtet. Das andere Ende der Dichtung wird dichtend mithilfe einer Überwurfmutter gegen die Stirnwand des Kontaktträgers gepresst. Eine solche Dichtung ist insbesondere in vibrationsstarken Anwendungsfeldern nicht zuverlässig genug.

### Aufgabenstellung

Die Aufgabe der Erfindung besteht darin einen Steckverbinder vorzuschlagen, wobei ein elektrisches Bauteil im Steckverbinder integriert werden kann, und der einfach und kostengünstig herstellbar ist. Die Aufgabe wird durch die kennzeichnenden Merkmale des Anspruchs 1 gelöst.

Vorteilhafte Ausgestaltungen der Erfindung sind in den Unteransprüchen angegeben.

Der hier vorgeschlagene Steckverbinder ist dafür vorgesehen dauerhaft hohe Ströme zu übertragen. Es handelt sich beispielsweise um einen Autoladestecker.

Im Gehäuse des Steckverbinders ist ein Kontaktträger angeordnet, in welchem wiederum zumindest ein Kontaktelement angeordnet ist. In der Regel, insbesondere wenn es sich um einen Autoladestecker handelt, werden mehrere Kontaktelemente im Kontaktträger angeordnet sein. In der Fachwelt wird der Kontaktträger oft auch als Isolierkörper bezeichnet, weil er aus einem elektrisch nicht leitenden Material gefertigt ist.

Jedes Kontaktelement ist mit einem Leiter eines angeschlossenen Kabels verbunden. Bei zwei oder mehr Kontaktelementen ist ein mehradriges Kabel am Steckverbinder angeschlossen. Die im Folgenden beschriebenen Merkmale des Steckverbinders können auf einpolige (nur ein Kontaktelement) und mehrpolige (zwei oder mehr Kontaktelemente) gleichermaßen angewandt werden.

Der Kontaktträger hat im Wesentlichen eine zylinderförmige Gestalt, die zwei Stirnflächen aufweist. Das im Kontaktträger angeordnete Kontaktelement ist orthogonal zu den Stirnflächen angeordnet. Das Kontaktelement und ein Teilstück des daran angeschlossenen Leiters befinden sich vollständig im Kontaktträger.

Die Stirnfläche, in der die Kontaktspitze der Kontaktelemente weist, wird auch als Steckseite bezeichnet. Die gegenüberliegende Stirnseite wird auch als Anschlussseite bezeichnet.

Das Gehäuse des Steckverbinders umfasst eine Öffnung, durch welche das angeschlossene Kabel in das Gehäuseinnere hineinragt. Diese Öffnung wird auch als Kabelabgangsöffnung bezeichnet. Das Kabel verläuft bis zum Kontaktträger, der am anderen Ende - ebenfalls im Inneren - des Gehäuses angeordnet ist. Bei einem Teil des im Gehäuseinneren verlaufenden Kabels wurde der Kabelmantel entfernt, so dass die einzelnen Leiter sichtbar sind. Der Steckverbinder umfasst eine Dichtung, die gleichzeitig die zweite Stirnfläche des Kontaktträgers und ein Teilstück des in das Gehäuse des Steckverbinders hineinragenden Kabels abdichtet. Erfindungsgemäß ist die Dichtung schtauchförmig ausgebildet und umfasst damit ein erstes und ein zweites Ende. Das erste Ende der Dichtung umgreift die Stirnfläche des Kontaktträgers, aus der die einzelnen Leiter herausragen. Das zweite Ende der Dichtung umgreift das in das Gehäuse hineinragende Kabel. Die an den Kontaktelementen angeschlossenen Leiter befinden sich in dem von der Dichtung abgedichteten Bereich.

Die Kontaktelemente sind über einzelne Dichtungen im Kontaktträger abgedichtet, so das Steckseitig keine Medien, wie beispielsweise Staub oder Wasser (Feuchtigkeit), in das Gehäuse eindringen können. Der Kontaktträger kann einen umlaufenden Kragen umfassen, an welchen eine Stirnfläche des Steckverbindergehäuses angrenzt. Beim zusammengebauten Steckverbinder ist ein Ende der Dichtung zwischen dem Kragen und der Stirnfläche gepresst, wodurch eine Dichtfunktion erreicht wird. Diese Dichtvariante wird auch als Axialpressung bezeichnet, weil die Stirnfläche in axialer Richtung gegen den Kragen gepresst ist. Vorteilhafterweise weist der Kontaktträger eine umlaufende Nut auf, in welche das erste Ende der Dichtung eingreift. Das Steckverbindergehäuse übt dann von oben eine Kraft auf die Dichtung aus, so dass die Dichtung in die Nut gepresst ist. Diese Variante wird auch als Radialpressung bezeichnet, da der Druck in radialer Richtung auf die Dichtung gebracht wird.

Die Dichtung kann aus elastischem Material, beispielweise EPDM, NBR, Polyurethan oder einer Mischung der vorgenannten Materialien, bestehen. Ein Ende der Dichtung kann mithilfe eines Fixiermittels au dem in das Steckverbindergehäuse hineinragenden Teil des Kabels fixiert sein. Die Dichtung wird beispielsweise mit einem so genannten Kabelbinder um den Kabelmantel des Kabels gezurrt, so dass eine Dichtfunktion erreicht wird.
Als Alternative zum Kabelbinder kann auch ein so genanntes Spanngummi verwendet werden. Wichtig ist nur, dass die Dichtung in radialer Richtung auf den Kabelmantel gepresst wird.
Das erste Ende der erfindungsgemäßen Dichtung ist zwischen Kontaktträger und Steckverbindergehäuse festgeklemmt. Das zweite Ende der Dichtung ist mit dem oben beschriebenen Fixiermittel dichtend am angeschlossenen Kabel fixiert.
In einer besonders bevorzugten Ausführungsform der Erfindung ist der Innenraum, den die beidseitig fixierte, schlauchförmige Dichtung einschließt, zumindest teilweise mit einem wärmeleitfähigen Material gefüllt.

Das Wärmeleitfähige Gel dient dazu die Wärme bei Hochstrombetrieb besser abzuführen. Dadurch wird die Stromtragfähigkeit des Steckverbinders verbessert. Die Dichtung kann im Gehäuse des Steckverbinders angeordnet sein und gleichzeitig den Anschlussbereich des Kontaktträgers und ein Teilstück des in das Gehäuse des Steckverbinders hineinragenden Kabels dichtend umschließen. Oder anders ausgedrückt: Das eine Ende der Dichtung umschließt den Kontaktträger teilweise, nämlich nur den Anschlussbereich, der vorzugsweise durch den oben erwähnten umlaufenden Kragen begrenzt ist. Das andere Ende der Dichtung umschließt einen Teil des angeschlossenen Kabels. Nach der Erfindung weist die
Dichtung eine Vertiefung auf. In die Vertiefung sind zwei Durchführungen für ein Kabel enthalten. Die Vertiefung ist vorzugsweise passgenau für ein elektronisches Bauteil ausgestaltet. Die Durchführungen sind für das Kabel des elektronischen Bauteils vorgesehen. Die Durchführungen sind derart ausgestaltet, dass sie das Kabel oder die Kabel des elektronischen Bauteils dichtend umschließen.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines Steckverbinders,
- Fig. 2: eine Schnittdarstellung durch den Steckverbinder,

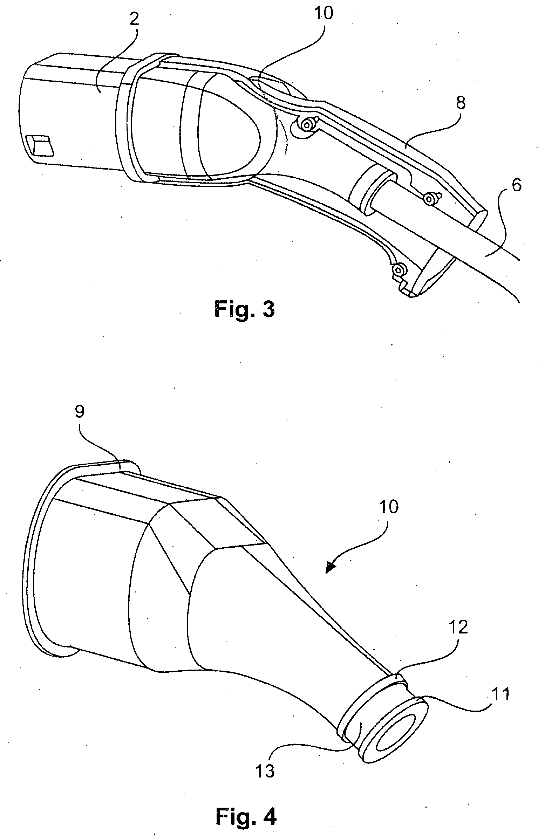

- Fig. 3: eine perspektivische Darstellung des Steckverbinders mit geöffneten Gehäuse,
- Fig. 4: eine perspektivische Darstellung einer Dichtung
- Fig. 5: eine Explosionszeichnung eines weiteren Ausführungsbeispiels eines erfindungsgemäßen Steckverbinders und
- Fig. 6: eine perspektivische Darstellung einer weiteren Ausführungsform einer erfindungsgemäßen Dichtung.

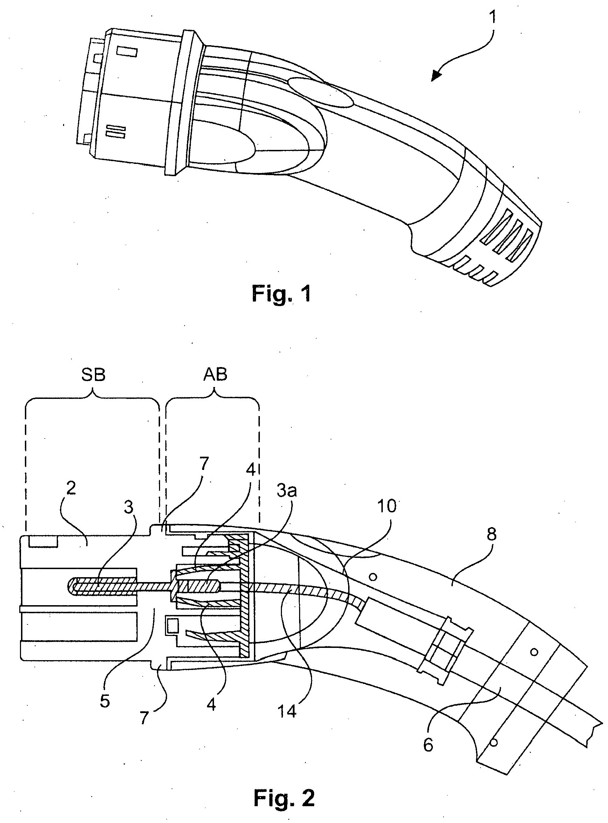

Die Figur 1 zeigt eine perspektivische Darstellung eines erfindungsgemäßen Steckverbinders 1. Hierbei handelt es sich um einen Autoladestecker der für den Ladevorgang eines Elektroautos eingesetzt wird.

Der Steckverbinder 1 besteht aus einem Kontaktträger 2, in welchem Kontaktelemente 3 angeordnet sind. In der Schnittdarstellung in Figur 2 ist lediglich ein Kontaktelement 3 zu sehen. Der Kontaktträger 2 umfasst nach innen gerichtete Haltearme 4, die das Kontaktelement 3 im Kontaktträger 2 in Position halten.

Der Kontaktträger 2 hat im Wesentlichen eine zylinderförmige Gestalt. Die Kontaktelemente 2 werden von einer Verdickung 5 umschlossen, in welche dafür vorgesehene Bohrungen eingebracht sind. In Steckrichtung bildet der Kontaktträger 2 einen Hohlraum, in welchen das Kontaktelement 3 hineinragt. In Anschlussrichtung bildet der Kontaktträger 2 ebenfalls einen Hohlraum, in welchen der Anschlussteil 3a des Kontaktelements 3 hineinragt. Am Anschlussteil 3a des Kontaktelements 3 wird ein Leiter 14 des mehradrigen Kabels 6 angeschlossen. Der Anschlussteil 3a kann beispielsweise als Crimpanschluss ausgeführt sein.

Der Kontaktträger 2 umfasst einen außen umlaufenden Kragen 7. Der umlaufende Kragen 7 trennt optisch den Anschlussbereich AB und den Steckbereich SB voneinander. Der Anschlussbereich AB des Kontaktträgers 2 wird von einer Dichtung 10 umschlossen. Die Dichtung 10, ist bis zur Stirnfläche des Kragens 7 über den Kontaktträger 2 aufgeschoben. Das Gehäuse 8 des Steckverbinders 1 übt eine Kraft auf die Stirnfläche des Kragens 7 aus, wodurch die Dichtung 10 zwischen Kragen 7 und Gehäuse 8 gepresst ist. Dadurch wird der Kontaktträger 2 zum Gehäuse 8 abgedichtet.

Die Dichtung 10 hat im Wesentlichen eine schlauförmige Gestalt, wobei sich die Schlauchform in Richtung des angeschlossenen Kabels 6 verengt. In Richtung des Kontaktträgers 2 umfasst die Dichtung 10 eine umlaufende Lippe 9. Die Lippe 9 ist der Teil der Dichtung 10, die zwischen dem Kragen 7 des Kontaktträgers 2 und der Stirnfläche des Gehäuses 8 gepresst ist.

In Richtung der Verengung weist die Dichtung zwei umlaufende, zueinander parallele Stege 11, 12 auf, die zwischen sich einen Fixierbereich 13 einschließen. Um den Fixierbereich 13 wird beispielsweise ein Kabelbinder festgezurrt, wodurch die Dichtung auf den Kabelmantel des Kabels 6 gepresst wird. Dadurch wird eine Kabeldichtung realisiert.

Die Kontaktelemente 3 im Kontaktträger 2 sind in der Regel noch einzeln abgedichtet. Die Hauptabdichtung des Steckverbinders wird allerdings dadurch erreicht, dass das erste Ende der Dichtung 10 zwischen Kontaktträger 2 und Gehäuse 8 des Steckverbinders 1 festgeklemmt ist und das zweite Ende der Dichtung 10 mit einem Fixiermittel dichtend am angeschlossenen Kabel 6 fixiert ist. Dadurch braucht das Gehäuse 8 nicht weiter gesondert abgedichtet werden.

Wie bereits oben erwähnt, kann der Innenraum, den die beidseitig fixierte, schlauchförmige Dichtung (10) einschließt, zumindest teilweise mit einem wärmeleitfähigen Material, beispielsweise mit einem wärmeleitfähigen Gel, gefüllt sein. Hierdurch werden gleich zwei Vorteile erzielt. Erstens wird die Wärme die beim Ladevorgang zwangsläufig entsteht besser abgeführt. Der Ladevorgang kann dadurch eventuell sogar beschleunigt werden.

Zweitens werden die Komponenten im abgeschlossenen Bereich durch das Gel mechanisch geschützt. Durch das Gel wird die Gummidichtung leicht ausgewölbt und dient quasi als Airbag bei beim versehentlichen Fallenlasen des Steckverbinders.

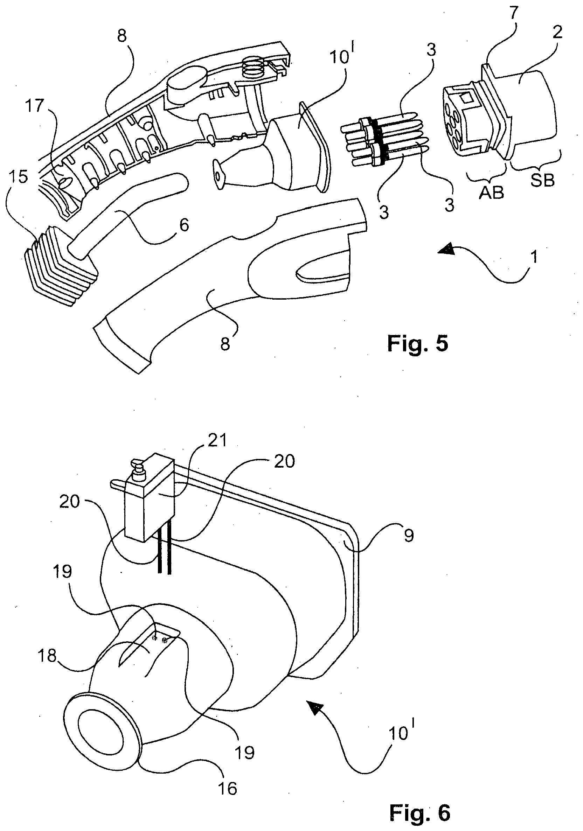

In der Figur 5 ist eine Explosionszeichnung einer weiteren Variante eines Autoladesteckers 1 zu sehen. Das am Steckverbinder angeschlossene Kabel 6 wird im Bereich des Gehäuseeingangs über eine Dichtung 15 abgedichtet, um das Gehäuse 8 vor eindringenden Medien wie Staub und Wasser zu schützen.
Die Lippe 9 der Dichtung 10' wird gegen den umlaufenden Kragen 7 des Kontaktträgers 2 gepresst und umschließt damit dessen Anschlussbereich AB. Der Steckbereich SB ragt aus dem Gehäuse 8 heraus. Der Kontaktträger 2 befindet sich demnach nur teilweise im Gehäuse 8.
Am anderen Ende umfasst die Dichtung 10' eine weitere Lippe 16, die mit einem im Gehäuse 8 angeordneten Fixiermittel 17 derart zusammenwirkt, dass das Ende das angeschlossene Kabel 6 dichtend umschließt. Beim Fixiermittel 17 handelt es sich beispielsweise um eine so genannte Schlauchschelle. Das Fixiermittel 17 kann auch einfach als Kabelzugentlastung dienen. In der Figur 6 ist in die Dichtung 10' nach der Erfindung eine Vertiefung 18 eingeformt, in welche zwei Löcher 19 eingebracht sind. Die Löcher 19 dienen jeweils als Durchführungen für ein Kabel 20 eines Mikroschalters 21. Die Vertiefung 18 ist an die Form des Mikroschalters 21 angepasst. Der Mikroschalter 21 ist ebenfalls im Steckverbindergehäuse 8 angeordnet. Die Funktion des Mikroschalters 21 wird im Folgenden nicht weiter beschrieben, weil diese nicht erfindungsrelevant ist. Anstatt eines Mikroschalters 21 könnte auch ein anderes elektronisches Bauteil vorgesehen sein.

**Bezugszeichenliste**

| | | | |
|---|---|---|---|
| 1 | Steckverbinder | 11. | Steg |
| 2 | Kontaktträger | 12. | Steg |
| | AB Anschlussbereich | | |
| | SB Steckbereich | | |
| 3 | Kontaktelement | 13. | Fixierbereich |
| | 3a Anschlussteil | | |
| 4 | Haltearm | 14. | Leiter |
| 5 | Verdickung | 15. | Dichtung |
| 6 | Kabel | 16. | Lippe |
| 7 | Kragen | 17. | Fixiermittel |
| 8 | Gehäuse | 18. | Vertiefung |
| 9 | Lippe | 19. | Loch |
| 10, 10' | Dichtung | 20. | Kabel |
| | | 21. | Mikroschalter |

## Patentansprüche

1. Steckverbinder,
• wobei der Steckverbinder (1) einen Kontaktträger (2) aufweist, in welchem zumindest ein Kontaktelement (3) angeordnet ist, wobei das zumindest eine Kontaktelement (3) mit einem Leiter eines angeschlossenen Kabels (6) verbunden ist,
• wobei der Kontaktträger (2) einen umlaufenden Kragen (7) aufweist, der den Kontaktträger (2) in einen Anschlussbereich (AB) und einen Steckbereich (SB) trennt
• und wobei das angeschlossene Kabel (6) in ein Gehäuse (8) des Steckverbinders (1) hineinragt,
• der Steckverbinder (1) eine Dichtung (10') aufweist, die im Gehäuse (8) des Steckverbinders angeordnet ist und
• die Dichtung (10) schlauchförmig ausgebildet ist und ein erstes und ein zweites Ende aufweist
• wobei ein Ende der Dichtung (10') eine umlaufende Lippe (9) aufweist und die Lippe (9) gegen den umlaufenden Kragen (7) des Kontaktträgers (2) gepresst ist und das andere Ende der Dichtung (10') eine weitere Lippe (16) aufweist, die das angeschlossene Kabel (6) dichtend umschließt wobei
• in die Dichtung (10') eine Vertiefung (18) eingeformt ist, in welche zwei Löcher (19) eingebracht sind **dadurch gekennzeichnet, dass** ein elektrisches Bauteil im Gehäuse angeordnet ist und die Vertiefung an die Form des elektronischen Bauteils angepasst ist, wobei die Löcher jeweils als Durchführungen für ein Kabel des elektronischen Bauteils dienen.

2. Steckverbinder nach vorstehendem Anspruch
**dadurch gekennzeichnet, dass**
das erste Ende der Dichtung (10) zwischen Kontaktträger (2) und Gehäuse (8) des Steckverbinders (1) festgeklemmt ist und das zweite Ende der Dichtung (10) mit einem Fixiermittel dichtend am Kabel (6) gepresst ist.

3. Steckverbinder nach vorstehendem Anspruch 2, **dadurch gekennzeichnet, dass**
es sich beim Fixiermittel um einen Kabelbinder handelt.

4. Steckverbinder nach Anspruch 2
**dadurch gekennzeichnet, dass**
es sich beim Fixiermittel um ein Spanngummi handelt.

5. Steckverbinder nach einem der vorstehenden Ansprüche
**dadurch gekennzeichnet, dass**
der Kontaktträger (2) zwei oder mehr Kontaktelemente (3) umfasst.

6. Steckverbinder nach einem der Ansprüche 1 bis 5
**dadurch gekennzeichnet, dass**
der Kontaktträger (2) eine umlaufende Nut aufweist, in welche das erste Ende der Dichtung (10) eingreift.

7. Steckverbinder nach einem der Ansprüche 1 bis 6
**dadurch gekennzeichnet, dass**
der Innenraum, den die beidseitig fixierte, schlauchförmige Dichtung (10) einschließt, zumindest teilweise mit einem wärmeleitfähigen Material, gefüllt ist.

## Claims

1. Plug-in connector,
• wherein the plug-in connector (1) has a contact carrier (2) in which at least one contact element (3) is arranged, wherein the at least one contact element (3) is connected to a conductor of a connected cable (6),
• wherein the contact carrier (2) has an encircling collar (7) which separates the contact carrier (2) into a connection region (AB) and a plug-in region (SB),
• and wherein the connected cable (6) protrudes into a housing (8) of the plug-in connector (1),
• the plug-in connector (1) has a seal (10'.) • which is arranged in the housing (8) of the plug-in connector, and
• the seal (10) is of tubular design and has a first and a second end,
• wherein one end of the seal (10') has an encircling lip (9) and the lip (9) is pressed against the encircling collar (7) of the contact carrier (2) and the other end of the seal (10') has a further lip (16) which surrounds the connected cable (6) in a sealing manner, wherein
• a recess (18) in which two holes (19) are made is formed in the seal (10'), **characterized in that** an electrical component is arranged in the housing and the recess is matched to the shape of the electronic component, wherein the holes each serve as bushings for a cable of the electronic component.

2. Plug-in connector according to the preceding claim,
**characterized in that**
the first end of the seal (10) is firmly clamped between contact carrier (2) and housing (8) of the plug-in connector (1), and the second end of the seal (10) is pressed against the cable (6) in a sealing manner by a fixing means.

3. Plug-in connector according to preceding Claim 2,
**characterized in that**
the fixing means is a cable tie.

4. Plug-in connector according to Claim 2,
**characterized in that**
the fixing means is an elastic band.

5. Plug-in connector according to one of the preceding claims,
**characterized in that**
the contact carrier (2) comprises two or more contact elements (3).

6. Plug-in connector according to one of Claims 1 to 5,
**characterized in that**
the contact carrier (2) has an encircling groove into which the first end of the seal (10) engages.

7. Plug-in connector according to one of Claims 1 to 6,
**characterized in that**
the interior which encloses the tubular seal (10) which is fixed on both sides is at least partially filled with a thermally conductive material.

## Revendications

1. Connecteur enfichable,
• dans lequel le connecteur enfichable (1) comporte un support de contact (2) dans lequel est disposé au moins un élément de contact (3), dans lequel ledit au moins un élément de contact (3) est relié à un conducteur d'un câble connecté (6),
• dans lequel le support de contact (2) comporte une collerette circonférentielle (7) qui sépare le support de contact (2) en une zone de borne (AB) et une zone d'enfichage (SB)
• et dans lequel le câble connecté (6) fait saillie dans un boîtier (8) du connecteur enfichable (1),
• le connecteur enfichable (1) comporte un joint d'étanchéité (10') disposé dans le boîtier (8) du connecteur enfichable ; et
• le joint d'étanchéité (10) est de forme tubulaire et comporte une première et une deuxième extrémité,
• dans lequel une extrémité du joint d'étanchéité (10') comporte une lèvre périphérique (9) et la lèvre (9) est serrée contre la collerette circonférentielle (7) du support de contact (2) et l'autre extrémité du joint d'étanchéité (10') comporte une lèvre supplémentaire (16) entourant de manière étanche le câble connecté (6), dans lequel
• un évidement (18), dans lequel deux orifices (19) sont ménagés, est formé dans le joint d'étanchéité (10'), **caractérisé en ce qu'**un composant électrique est disposé dans le boîtier et **en ce que** l'évidement est adapté à la forme du composant électronique, dans lequel les orifices servent respectivement de traversées pour un câble du composant électronique.

2. Connecteur enfichable selon la revendication précédente,
**caractérisé en ce que** la première extrémité du joint d'étanchéité (10) est serrée entre le support de contact (2) et le boîtier (8) du connecteur enfichable (1) et **en ce que** la seconde extrémité du joint d'étanchéité (10) est serrée contre le câble (6) à l'aide d'un moyen de fixation.

3. Connecteur enfichable selon la revendication 2 ci-dessus,
**caractérisé en ce que** le moyen de fixation est un serre-câble.

4. Connecteur enfichable selon la revendication 2, **caractérisé en ce que** le moyen de fixation est un caoutchouc de serrage.

5. Connecteur enfichable selon l'une des revendications précédentes,
**caractérisé en ce que** le support de contact (2) comprend deux ou plusieurs éléments de contact (3).

6. Connecteur enfichable selon l'une des revendications 1 à 5,
**caractérisé en ce que** le support de contact (2) présente une rainure circonférentielle dans laquelle s'engage la première extrémité du joint d'étanchéité (10).

7. Connecteur enfichable selon l'une des revendications 1 à 6,
**caractérisé en ce que** l'espace intérieur, qui comprend le joint d'étanchéité tubulaire (10) fixé des deux côtés, est rempli au moins partiellement d'un matériau thermoconducteur.
